# EUROPÄISCHE PATENTSCHRIFT

(11) **EP 1 867 377 B1**
(45) Veröffentlichungstag und Bekanntmachung des Hinweises auf die Patenterteilung: **05.10.2011**
(21) Anmeldenummer: 07011450.9
(22) Anmeldetag: 12.06.2007
(51) Int. Cl.: B01D 46/10, B01D 46/52

(54) **Filtereinrichtung und Verfahren zur Herstellung einer Filtereinrichtung**
Filter device and method for its manufacture
Dispositif de filtre et procédé de fabrication d'un dispositif de filtre

(30) Priorität: 12.06.2006 DE 102006027463
(43) Veröffentlichungstag der Anmeldung: 19.12.2007
(73) Patentinhaber: MANN+HUMMEL Innenraumfilter GmbH & Co. KG, 95482 Gefrees (DE)
(72) Erfinder: Friedrich, Matthias, 95352 Marktleugast (DE); Schön, Mirco, 95233 Helmbrechts (DE); Keibel, Thorsten, 95213 Münchberg (DE)
(74) Vertreter: LOUIS, PÖHLAU, LOHRENTZ

(56) Entgegenhaltungen:
- EP-A1- 0 450 299
- EP-A2- 0 983 784
- DE-A1- 19 844 874
- JP-A- 57 007 219
- US-A- 5 512 172
- US-A- 5 676 778

## Beschreibung

Die Erfindung betrifft ein Verfahren zur Herstellung einer solchen Filtereinrichtung mit einem Fittermaterialkörper und einem Rahmen, der mit mindestens einem Abschnitt eines Randbereichs des Filtermaterialkörpers verbunden ist, wobei der Filtermaterialkörper und der Rahmen durch Schweißen miteinander verbunden werden.

Aus der DE 185 32 436 C1 ist eine solche Filtereinrichtung bekannt. Diese Filtereinrichtung besteht aus einem Faltenpack mit randseitigen Rahmenstreifen, die als V-Lasche ausgebildet sind, wobei der eine Schenkel der V-Lasche jeweils mit den zickzackförmigen Faltenflanken des Faltenpacks verschweißt ist und der andere Schenkel als Dichtlasche V-förmig absteht. Die Schweißverbindung soll durch Schweißen, vorzugsweise durch Ultraschallschweißen, erfolgen, indem der Schenkel durch nicht näher spezifizierte Andruckelemente an die Faltenflanken angedrückt und dabei Schweißenergie zugeführt wird.

Aus der DE 195 28 670 C2 ist ein Faltenfiltereinsatz bekannt, der aus einem Faltenpack mit seitlich fixierten zusammenstauchbaren Bändern besteht, welche mit den Faltenflanken verklebt oder verschweißt sind, wodurch der Faltenfiltereinsatz in Faltungsrichtung stauchbar ist.

Aus der DE 44 45 842 A1 ist eine Filtereinrichtung bekannt, die einen Faltenpack aufweist mit seitlich an die umgeknickten Faltenflanken angeschweißten Dichtbändern. Die Schweißverbindung ist über Ultraschallschweißen mit zwei Schweißnähten ausgeführt, die geradlinig parallel zueinander mit gegenseitigem Abstand in Erstreckungsrichtung der Dichtbänder verlaufen. Die Abdichtung zum Faltenpack erfolgt hierbei durch die die Faltenflanken kreuzenden Schweißnähte in Verbindung mit der Abknickung der Faltenflanken. Eine Abdichtung des Dichtbands zum äußeren Gehäuse erfolgt dadurch, dass zwischen den parallelen Schweißnähten das Dichtband einen leistenförmigen Wulst bildet.

Aus der DE 40 10 732 A1 ist eine Filtereinrichtung bekannt, die einen Faltenpack aufweist, dessen Endfalten flächig mit stirnseitigen Rahmenelementen verschweißt sind. Die seitlichen zickzackförmigen Faltenflanken sind mit seitlichen Rahmenstreifen mittels einer Induktionsheizung verschweißt.

Aus der DE 40 09 246 A1 ist eine Filtereinrichtung mit im Querschnitt zickzack- oder sternförmigem Faltenpack bekannt, dessen zickzack- bzw. sternförmige Faltenflanken über eine aufgeschweißte Abdeckung abgeschlossen sind. Die Verschweißung erfolgt durch Ultraschallschweißen.

Aus den DE 40 02 078 C1, US-Patent US 6,161,540 und DE 199 41 029 A1 sind diverse Filtereinrichtungen bekannt, die jeweils einen Faltenpack aufweisen, bei den jeweils der Randbereichen eine Verschweißung in Art einer Versiegelung aufweist. Bei der DE 40 02 078 C1 sind die Faltenflanken abgeknickt und miteinander ultraschallverschweißt unter Ausbildung einer randseitigen Versiegelung. Bei der US 6,161,540 ist der Faltenpack mit einer oberseitigen und einer unterseitigen flächigen Abdeckung versehen, deren Ränder umlaufend miteinander verschweißt sind. Bei der DE 199 41 029 A1 sind die oberseitigen und unterseitigen Faltenkanten des Faltenpacks überlappend abgeknickt und im Bereich der Überlappungen miteinander verschweißt. Die Verschweißung erfolgt durch Ultraschallschweißen. Die miteinander verschweißten Faltenkanten bilden oberseitige und unterseitige Deckflächen des Faltenpacks.

Aus der DE 102 24 676 A1 und der JP 05-049967 A sind Filtereinrichtungen mit Faltenpack bekannt, bei denen Endfaltenfixierungen mittels Ultraschallschweißen vorgesehen sind. Die Endfalten sind hierfür mit stirnseitigen Versteifungselementen des Rahmens verschweißt

Aus der WO 96/14134 ist ein Filtereinrichtung mit Faltenpack bekannt, bei dem die Falten durch Verschweißen stabilisiert sind. Der Faltenpack besteht hierbei aus zwei übereinander angeordneten Faltenpacks, die mit aufeinander stehenden Faltenkanten unter Zwischenschaltung eines flächigen Trägers so angeordnet sind, dass sie im Querschnitt rautenförmige nebeneinander liegende Fächer bilden, welche durch den Träger mittig unterteilt sind. Die auf den mittigen Träger aufeinander stoßenden Faltenkanten sind gemeinsam mit dem Träger ultraschallverschweißt.

Die JP 59-082919 beschreibt eine Filtereinrichtung mit einem Faltenpack, bei dem zur Stabilisierung der Falten, die Faltenkanten durch Thermokompressionsschweißen abgeflacht sind.

Aus der US 5,512,172 A sind Filteranordnungen mit gefaltetem Filter-Medium bekannt. Das Filter-Medium wird über ein Verfahren bei der Herstellung in einem Stützrahmen eingesetzt. Das Herstellungsverfahren verwendet ein Schweißverfahren zur Dichtung. Die gefalteten Ränder des Filter-Mediums werden mit einem von dem Rahmen nach innengerichteten abstehenden Dichtungsmittel verschweißt, wobei die Schweißenergie nicht durch die Rahmenteile geleitet wird, sondern über eine Sonotrode, die das nach innengerichteten abstehenden Dichtungsmittel von oben oder unten kontaktiert.

Aus der US 5,676,778 A betrifft ein Herstellungsverfahren für eine Filtereinrichtung, die eine Filterrahmenteil aufweist. Das Filtermedium wird gestützt, vorzugsweise durch ein Paar Stützteile. Die Stützteile halten das Filtermedium und erlauben dass Teile des Filtermediums bloßliegen. Das Filterrahmenteil wird um das Filtermedium angeordnet. Mittels einer rahmenseitig angeordneten Sonotrode wird durch das Filterrahmenteil das Filterrahmenteil mit dem bloßliegenden Teil des Filtermediums ultraschallverschweißt. Abschließend werden die Stützteile entfernt.

Der Erfindung liegt die Aufgabe zu Grunde ein Verfahren zu schaffen, das eine besonders einfache und kostengünstige Herstellung einer Filtereinrichtung ermöglicht.

Diese Aufgabe wird mit dem Herstellungsverfahren gemäß dem Patentanspruch 1 gelöst.

Das Herstellungsverfahren gemäß Anspruch 1 sieht vor, dass eine Filtereinrichtung hergestellt wird, die einen Filtermaterialkörper und einen Rahmen aufweist, der mit mindestens einem Randbereich des Filtermaterialkörpers verbunden ist. Das Herstellungsverfahren sieht vor, dass der Filtermaterialkörper und der Rahmen durch Verschweißen miteinander verbunden werden, indem zunächst eine Anordnung aus dem Filtermaterialkörper, einem Energierichtungsgeber und dem Rahmen erstellt wird, bei der der Filtermaterialkörper, der Energierichtungsgeber und der Rahmen in einer Reihe nebeneinander angeordnet sind und sodann mit Hilfe einer Sonotrode Energie in diese Anordnung derart eingeleitet wird, dass die Schweißverbindung gebildet wird.

Die Energierichtungsgeber werden beim Schweißvorgang, vorzugsweise zwischen die zu verschweißenden Bauteile angeordnet. Der Energierichtungsgeber hat die Aufgabe beim Schweißvorgang die Schweißenergie durch einen örtlich sehr begrenzten Bereich zu leiten, um in dem Bereich des Energierichtungsgebers die Schweißverbindung auszubilden.

Der Energierichtungsgeber kann vorzugsweise als Spritzgussteil ausgebildet sein. Vorzugsweise kann auch der Rahmen oder das Rahmenelement als Spritzgussteil ausgebildet sein. Vorteilhafterweise kann das Rahmenelement und der Energierichtungsgeber als einstückiges Spritzgussteil ausgeführt werden.

Es ist vorgesehen, daß die Verbindung des Rahmens mit dem Abschnitt des Randbereichs des Filtermaterialkörpers dadurch ausgebildet ist, dass der Rahmen und der Randbereich des Filtermaterialkörpers miteinander verschweißt sind. Besonders vorteilhaft ist die Schweißverbindung als Schweißnaht ausgebildet, die in ihren Abmessungen quer zur Längserstreckung eng begrenzt ausgebildet und zwischen dem Rahmen und dem Randbereich des Filtermaterialkörpers angeordnet ist. Vorteilhafterweise ist sie als schmale Schweißnaht, insbesondere linienförmige Schweißnaht, ausgebildet sein.
Bei Ausführungen mit plissiertem Filtermaterialkörper ist vorgesehen, dass der zickzackförmige Verlauf der Schweißnaht dem zickzackförmigen Verlauf der Faltenflanken folgt und dabei die Faltenflanken des plissierten Filtermaterialkörpers mit den Rahmenelementen verbindet.

Die in ihren Abmessungen quer zu ihrer Längserstreckung eng begrenzte Schweißverbindung, die lediglich im Anschlußbereich der miteinander verschweißten Bauelemente der Filtereinrichtung ausgebildet ist, kann besonders energiesparend hergestellt werden. Vorzugsweise wird Ultraschallschweißverfahren eingesetzt. Die über die Sonotrode in die zu verschweißenden Bauteile eingeleitete Schweißenergie wird räumlich eng begrenzt auf den gewünschten nahtförmigen Verschweißungsbereich begrenzt. Diese Schweißverbindungen können insbesondere unter Einsatz von Energierichtungsgebern mit dem Herstellungsverfahren gemäß Anspruch 1 realisiert werden.

Der Energierichtungsgeber kann bei der Ausbildung der Schweißverbindung derart mit eingebunden werden, dass er selbst vollständig oder nur teilweise im Bereich der Schweißverbindung verschmolzen wird. Der Energierichtungsgeber ist vorzugsweise ausreichend formsteif und/oder drucksteif ausgebildet, um eine stabile Anordnung der zu verschweißenden Bauteile zu gewährleisten, wenn sie bei der Einleitung der Schweißenergie gegeneinander gepresst werden. Die zu verschweißenden Bauteile unter gegebenenfalls Zwischenschaltung eines oder mehrerer Energierichtungsgeber werden zwischen der Sonotrode und einem Gegenlager angeordnet. Das Gegenlager kann als Amboß dienen, wenn der Druck über die Sonotrode eingebracht wird. Es ist auch der umgekehrte Fall möglich, bei dem der Druck über das Gegenlager eingebracht wird.

Die Anordnung bei dem Schweißvorgang wird vorzugsweise so eingestellt, dass die Schweißverbindung in einem Bereich ausgebildet wird, in welchem der Randbereich des Filtermaterialkörpers unmittelbar an dem Rahmenelement angrenzend oder unter Zwischenschaltung des Energierichtungsgebers oder eines Restbestandteils des Energierichtungsgebers an dem Rahmenelement angrenzend angeordnet ist.

Um eine dauerhaft haltbare Schweißverbindung zu erhalten, kann vorgesehen werden, dass der Energierichtungsgeber aus Material mit ähnlichen thermischen Eigenschaften wie der Filtermaterialkörper, vorzugsweise aus identischem Material wie der Filtermaterialkörper ausgebildet ist und/oder aus Material mit ähnlichen thermischen Eigenschaften wie der Rahmen, vorzugsweise aus identischem Material wie der Rahmen ausgebildet ist. Es sind damit Ausführungen möglich, bei denen die Schweißverbindung ausschließlich aus Material des Rahmens und aus Material des Randbereichs des Filtermaterialkörpers oder ausschließlich aus dem Material des Rahmens, aus dem Material des Randbereichs des Filtermaterialkörpers und aus dem Material des Energierichtungsgebers besteht Vorzugsweise werden als Material thermoplastische Kunststoffe, wie PP (d. h. Polypropylen), PET (d. h. Polyethylenterephthalat), PA (d. h. Polyamid), usw. verwendet.

Es ist vorgesehen, dass der Energierichtungsgeber als gegenüber dem Filtermaterialkörper und/oder gegenüber dem Rahmen separates Bauteil ausgebildet ist. Vorzugsweise ist der Energierichtungsgeber so ausgebildet, dass er ausreichend formstabil und/oder druckstabil ist, wenn er beim Schweißvorgang zwischen die zu verschweißenden Bauteile angeordnet wird und die gesamte Anordnung beim Einleiten der Schweißenergie zusammengepresst wird.

Energierichtungsgeber werden insbesondere dann eingesetzt, wenn eines oder mehrere der zu verschweißenden Bauteile relativ weich ist bzw. sind. Über den Energierichtungsgeber wird beim Zusammenpressen der zu verbindenden Bauteile trotz der relativen Weichheit und damit Verformbarkeit einer oder mehrerer der zu verschweißenden Bauteile eine stabile gegenseitige Anlagepostion der zu verschweißenden Bauteile erhalten. Die gegenseitigen Anlagebereiche der aneinandergrenzenden Bauteile können aufgrund des Energierichtungsgebers räumlich und/oder flächenmäßig quer zu ihrer Längserstreckung eng begrenzt ausgebildet sein, so dass die Schweißverbindung sodann beim Einleiten der Schweißenergie als dünne Schweißnähte gebildet werden.

Die Sonotrode ist beim Schweißvorgang so angeordnet, dass die Energie über die Sonotrode in den Rahmen eingeleitet wird und durch den Rahmen, den Energierichtungsgeber und den Filtermaterialkörper hindurch geleitet wird, und zwar durch einen Bereich, in welchem zumindest in einem Abschnitt die Schweißverbindung ausgebildet wird.

Bei besonderen Ausführungen kann vorgesehen sein, dass mehrere Sonotroden zum Einleiten der Schweißenergie zur Ausbildung der Schweißverbindung verwendet werden. Bei solchen Ausführungen können auch mehrere Schweißverbindungen gleichzeitig an verschiedenen Seiten der Filtereinrichtung durchgeführt werden. An dem Filtermaterialkörper, der mit einem rechteckigen oder mehreckigen Grundriß oder einem Grundriß mit Freiformkonturen ausgebildet sein kann, können Rahmenelemente, die einen um die Seiten des Filtermaterialkörpers umlaufenden Rahmen bilden, gleichzeitig oder sukzessive angeschweißt werden.

Beim Schweißvorgang kann eines oder mehrere der miteinander zu verschweißenden Bauelemente der Filtereinrichtung auch in einer Werkzeugaufnahme eingebracht sein. Der zu verschweißende Bereich des Bauelements ragt aus der Werkzeugaufnahme heraus und/oder liegt frei, so dass das daran anzuschweißende Bauelement über die Sonotrode mit Druck beaufschlagt in Kontaktlage gebracht werden kann und die Werkzeugaufnahme bei dem Zusammenpressen der Teile als Amboß wirkt. Im Fall, dass ein Energierichtungsgeber eingesetzt wird, kann dieser zwischen den beiden zu verschweißenden Bauteilen der Filtereinrichtung zwischengeschaltet angeordnet sein.

Eine besonders einfache Herstellungsweise für Filtereinrichtungen, die ein oder mehrere Funktionsbauteile aufweisen, die mit dem Rahmen und/oder dem Filtermaterialkörper durch Verschweißen verbunden sind, ergibt sich, wenn auch der Schweißvorgang zum Verschweißen der Funktionsbauteile mit einem Verfahren erfolgt, das dem Schweißverfahren entspricht, das zum Verschweißen des Filtermaterialkörpers mit den Rahmenelementen eingesetzt wird. Vorzugsweise wird auch bei diesem Schweißverfahren eine entsprechend dünne Schweißnaht zur Befestigung der Funktionsbauteile hergestellt und insbesondere auch durch Ultraschallschweißen.

Sämtliche Schweißschritte können gemeinsam in einer Apparatur mit einer oder mehreren Sonotroden durchgeführt werden. Völlig entsprechend wie bei der Herstellung der Schweißverbindungen zwischen den Filtermaterialkörper und den Rahmenelementen können auch beim Anschweißen der Funktionsbauteile Energierichtungsgeber eingesetzt werden.

Es kann vorgesehen sein, dass die Schweißverbindung zwischen dem Funktionsbauteil und dem Rahmen bzw. dem Filtermaterialkörper ausgebildet wird bevor das Verschweißen des Fittermaterialkörpers mit dem Rahmen erfolgt. Alternativ ist es jedoch auch möglich so zu verfahren, dass das Anschweißen des Funktionsbauteils gleichzeitig mit dem Verschweißen des Filtermaterialkörpers und des Rahmens oder nach dem Verschweißen des Flitermaterfalkörpers und des Rahmens erfolgt.

Im Nachfolgenden wird die Erfindung anhand von Ausführungsbeispielen in Verbindung mit Figuren näher beschreiben. Dabei zeigen:
- Figur 1:: Eine Draufsicht auf ein erstes Ausführungsbeispiel einer Filtereinrichtung.
- Figur 2:: Eine Schnittansicht entlang II-II in Figur 1.
- Figur 3:: Eine vergrößerte perspektivische Ansicht auf die Innenseite des Rahmens mit Energierichtungsgeber eines Ausführungsbeispiels, das nicht Teil der Erfindung ist.
- Figur 4:: Eine Draufsicht auf die Schweißanordnung zur Herstellung der Schweißnaht zwischen dem Filtermaterialkörper und dem Rahmen.
- Figur 5:: Eine Frontansicht eines weiteren Ausführungsbeispiels einer Filtereinrichtung in Figur 6a und 6b mit Gehäuse.
- Figur 6a:: Eine Frontansicht des weiteren Ausführungsbeispiels in Figur 5.
- Figur 6b:: Eine Draufsicht des weiteren Ausführungsbeispiels in Figur 5.
- Figur 7a:: Eine Querschnittansicht einer speziellen Anordnung des Energierichtungsgebers und des anzuschweißenden Filtermaterials in der Schweißanordnung unmittelbar vor dem Schweißvorgang.
- Figur 7b bis 7e:: Querschnittansichten entsprechend Figur 7a von abgewandelten Ausführungsbeispielen.
- Figur 7x bis 7z:: Querschnittansichten ausgehend von Ausführungen entsprechend den Figuren 7a bis 7e in verschweißtem Zustand
- Figur 8a:: Eine Draufsicht einer speziellen Anordnung des Energierichtungsgebers auf der dem Filtermaterial zugewandten Seite des seitlichen Rahmenelements, in schematisierter Darstellung.
- Figur 8b bis 8i:: Draufsichten entsprechend Figur 8a von abgewandelten Ausführungsbeispielen.

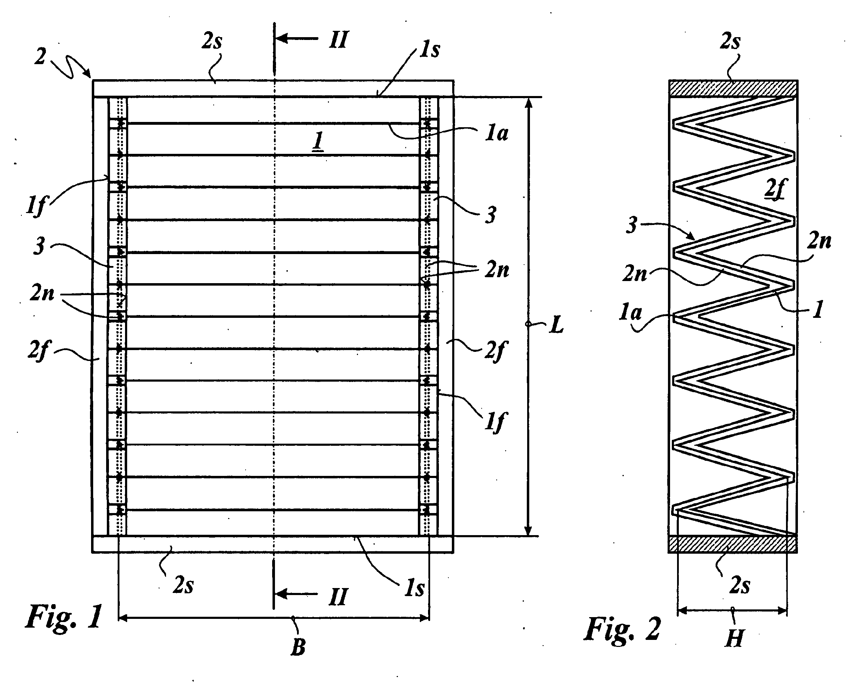

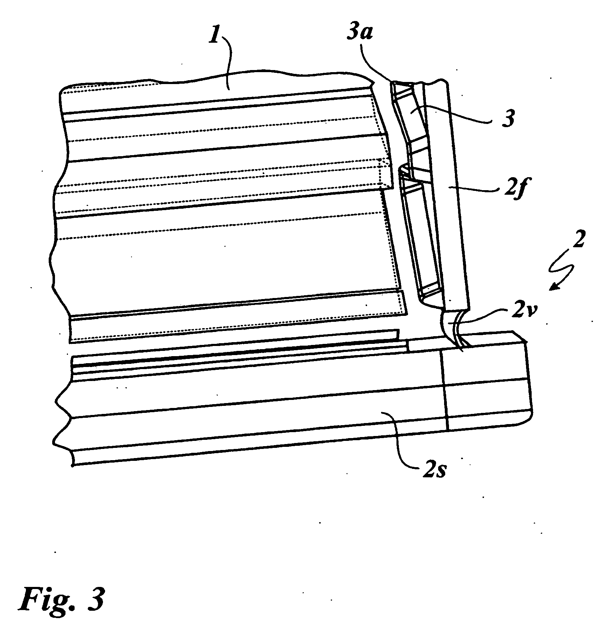

Bei dem in den Figuren 1 bis 3 dargestellten Ausführungsbeispiel handelt es sich um eine Filtereinrichtung mit einem plissierten Fittermaterialkörper 1 mit einem Rahmen 2. Figur 3 zeigt ein Ausführungsbeispiel, das nicht Teil der Erfindung ist. Der Filtermaterialkörper 1 ist in dem dargestellten Fall als ein im wesentlichen plattenförmiger Körper mit in Draufsicht rechteckigem Grundriß ausgebildet. Er weist eine Länge L, eine Breite B und eine Höhe H auf. Der plattenförmige Körper 1 ist aus plissiertem Filtermaterial ausgebildet. Die Faltenkanten 1a liegen parallel zu den Stirnkanten 1s des Körpers und erstrecken sich über die Breite B des Filtermaterialkörpers 1. Die Faltungsrichtung des plissierten Filtermaterialkörpers 1 verläuft in Längsrichtung, d.h. parallel zu den Längsseitenkanten 1f des Filtermaterialkörpers 1 über die Länge L In dem dargestellten Fall weist der Filtermaterialkörper 1, wie in Figur 2 erkennbar, nur eine Faltenlage auf. Die Faltenhöhe der Faltenlage bestimmt in diesem Fall die Höhe H des Filtermaterialkörpers 1.

Der Filtermaterialkörper 1 ist an seinen Längs- und Stirnseiten von dem Rahmen 2 umgeben. Der Rahmen besteht aus vier streifenförmigen Rahmenelementen, nämlich zwei seitlichen Rahmenelementen 2f und zwei stirnseitigen Rahmenelementen 2s, die an den betreffenden Seiten 1f bzw. 1s des Filtermaterialkörpers 1 anliegend angeordnet und in den Anlagestellen über Schweißverbindung in Form von Schweißnähten 2n mit dem Filtermaterialkörper 1 verschweißt sind. Die Länge der streifenförmigen Rahmenelemente 2f, 2s entspricht jeweils der Erstreckung der Längsseiten 1f bzw. Stirnseiten 1s des Filtermaterialkörpers 1. Die Rahmenelemente sind an den Seiten des Filtermaterialkörpers 1 so angeordnet, dass diese die betreffenden Seiten des Filtermaterialkörpers 1 vollständig abdecken und jeweils in Höhenerstreckung des Filtermaterialkörpers 1 unterhalb und oberhalb des Körpers etwas überstehen. Die jeweils aneinander angrenzenden Rahmenelemente 2f, 2s, 2f, 2s sind in den Eckbereichen des Rahmens 2 jeweils miteinander verbunden. Diese Verbindung kann einstückig sein, indem die Eckbereiche jeweils als Umbiegung, ggf. mit Ritzung ausgebildet sind oder die aneinander grenzenden Rahmenelemente 2f, 2s, 2f, 2s können auch jeweils über Schweißverbindungen miteinander verbunden sein.

Die Schweißverbindung zwischen dem plissierten Filtermaterialkörper 1 und den seitlichen und stirnseitigen Rahmenelementen 2f, 2s sind jeweils im wesentlichen linienförmige Schweißnähte 2n, wie am besten in Figur 2 erkennbar ist. Die Schweißnähte zwischen den Faltenflanken und der Innenseite der seitlichen Rahmenelemente 2f ist jeweils als zickzackförmige Linie entsprechend dem Verlauf der Faltenflanken ausgebildet, was ebenfalls in Figur 2 gut erkennbar ist.

In den Figuren 1 und 3 ist erkennbar, dass zwischen den Faltenflanken und der Innenseite des seitlichen Rahmenelements 2f jeweils ein Körper 3 angeordnet ist, der die Form einer zickzackförmigen Leiste aufweist, deren Zickzackform dem Verlauf der Faltenflanken entspricht. Dieser Körper 3 ist an seiner einen Seite mit der ihm zugewandten Innenseite des seitlichen Rahmenelements 2f über eine zickzackförmige linienförmige Schweißnaht 2n verschweißt. Der Körper 3 weist an seiner den Faltenflanken zugewandten anderen Seite eine Aufnahmenut 3a zur Aufnahme dieser Faltenflanken auf. An der den Faltenflanken zugewandten Seite des Körpers 3 ist dieser über eine entsprechende zickzackförmige linienförmige Schweißnaht 2n mit den in die Aufnahmenut 3a eingreifenden Faltenflanken verschweißt. Der Körper 3 bildet beim Schweißvorgang einen sogenannten Energierichtungsgeber.

In Figur 3, die ein Ausführungsbeispiel zeigt, das nicht Teil der Erfindung ist, sind die seitlichen und stirnseitigen Rahmenelemente 2f, 2s dargestellt, die über einen flexiblen und elastischen Streifens miteinander verbunden sind, der als Filmscharnier 2v ausgebildet ist. Das stirnseitige Rahmenelement 2s weist eine nicht näher dargestellte Einrichtung zur Befestigung der Stirnkanten 1s auf. Die Befestigungseinrichtung kann z. B. als Befestigungsleiste und/oder als Befestigungsnut ausgebildet sein.

Das seitliche Rahmenelement 2f, wie in Figur 3 gezeigt, weist auf seiner Innenseite den Energierichtungsgeber 3 auf, der in dem dargestellten Fall als leistenförmiger Körper ausgebildet ist. Dieser Energierichtungsgeber 3 ist in diesem Fall einstückig mit dem seitlichen Rahmenelement 2f verbunden, hierbei ist das Rahmenelement 2f mit Energierichtungsgeber 3 vorzugsweise als Spritzgussteil ausgebildet. Der zickzackförmige Verlauf des Energierichtungsgebers 3 entspricht der Faltung des Filtermaterialkörpers 1. Beim Schweißvorgang wird zwischen dem Energierichtungsgeber 3 und den Faltenflanken des Filtermaterialkörpers 1 durch Ultraschallverschweißen eine Dichtnaht ausgebildet. Diese Dichtnaht ist zwischen der Faltenflanke und dem mit dem Rahmenelement 2f einstückig verbundenen Energierichtungsgeber 3 ausgebildet. Bei abgewandelten Ausführungen kann der Energierichtungsgeber 3 separat vom Rahmen 2 ausgebildet sein. In diesen Fällen wird dann zusätzlich eine Schweißnaht 2n zwischen dem Energierichtungsgeber 3 und dem Rahmenelement 2f gebildet Grundsätzlich kann der Energierichtungsgeber 3 beim Schweißvorgang ganz oder teilweise in der Schweißnaht 2n verschmolzen werden. Bei einem vollständigen Verschmelzen wird eine gemeinsame Schweißnaht 2n ausgebildet, die die Faltenflanke mit dem Rahmenelement 2f verbindet.

Der Filtermaterialkörper 1 ist bei dem Ausführungsbeispiel in den Figuren 1-3 einlagig ausgebildet, d. h. der Filtermaterialkörper 1 besteht aus einer im Querschnitt zickzackförmigen gefalteten Filtermaterialiage. Bei abgewandelten Ausführungen kann der Filtermaterialkörper 1 auch mehrlagig ausgebildet sein, d. h. aus mehreren im Querschnitt zickzackförmigen Filtermateriallagen bestehen. In diesem Falle kann der Energierichtungsgeber 3 aus mehreren parallel liegenden im Grundriß zickzackförmig verlaufenden Körpern bestehen oder als einteiliger Körper mit entsprechenden parallelen Ausformungen ausgebildet sein. Die Schweißverbindung kann in diesem Falle zwischen den Endflanken der Filtermateriallagen und den separaten Energierichtungsgebern bzw. den Ausformungen des gemeinsamen Energierichtungsgebers erfolgen.

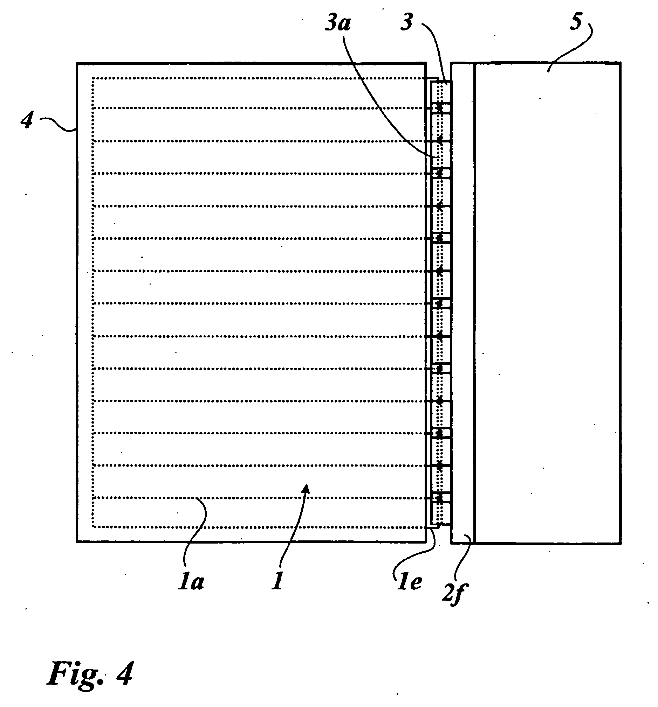

Figur 4 zeigt eine Anordnung für die Herstellung der Schweißverbindungen bei dem Ausführungsbeispiel der Figuren 1 bis 3. In der Darstellung in Figur 4 ist der plissierte Filtermaterialkörper 1 in eine Werkzeugaufnahme 4 eingesetzt und zwar derart, dass der zu verschweißende Randbereich des Filtermaterialkörpers, nämlich der Endbereich der Faltenflanken 1e aus der Werkzeugaufnahme 4 ca. 2mm auskragt und herausragt. Zwischen den auskragenden Faltenflanken 1e und dem zu verschweißenden seitlichen Rahmenelement 2f ist in der Darstellung in Figur 4 der Energierichtungsgeber 3 angeordnet. Er weist auf der zu den Faltenflanken gewandten Seite eine Aufnahmenut 3a auf.

Zur Einleitung der Schweißenergie ist eine Sonotrode 5 vorgesehen. Diese ist an der von dem Energierichtungsgeber 3 und dem Filtermaterialkörper 1 abgewandten Seite an dem zu verschweißenden seitlichen Rahmenelement 2f anliegend angeordnet, um die Schweißenergie in das Rahmenelement 2f einzuleiten. Die Schweißenergie wird aufgrund des Energierichtungsgebers 3 ausschließlich in den Anschlußbereich, d. h. in den Bereich der Aufnahmenut 3a des Energierichtungsgebers 3, zwischen den Faltenflanken und dem Energierichtungsgeber 3 bzw. zwischen dem Energierichtungsgeber 3 und dem seitlichen Rahmenelement 2f eingeleitet unter Ausbildung der Schweißnaht in den Anschlußbereichen. Aufgrund des zickzacklinienförmigen Verlaufs der Anschlußbereiche sind die Schweißverbindungen als zickzacklinienförmige Schweißnähte ausgebildet.

Bei dem Schweißvorgang wird in Figur 4 die Sonotrode 5 gegen die Anordnung, bestehend aus dem seitlichen Rahmenelement 2f, dem Energierichtungsträger 3 und dem in die Werkzeugaufnahme 4 aufgenommenen Filtermaterialkörper 1 gepreßt. Die Werkzeugaufnahme 4 bildet bei diesem Anpreßvorgang den Amboß. Bei dem Anpreßvorgang wird ein fester im wesentlichen linienförmiger Kontakt zwischen den Faltenflanken des Filtermaterialkörpers 1 und dem Energierichtungsgeber 3 und zwischen dem Energierichtungsgeber 3 und dem Rahmenelement 2f erhalten. Die Faltenflanken greifen hierbei in die Aufnahmenut 3a des Energierichtungsgebers 3 formschlüssig ein. Beim Einleiten der Schweißenergie über die Sonotrode 5 bilden sich in den Kontaktbereichen der zu verschweißenden Elemente die Schweißnähte aus.

Bei dem dargestellten Ausführungsbeispiel ist der plissierte Filtermaterialkörper 1 aus Vliesstoff ausgebildet. Das Rahmenelement besteht aus einem durch Spritzguß oder Extrusion hergestellten thermoplastischen Kunststoff. Für die Herstellung der Schweißverbindung ist es von Vorteil, wenn der Filtermaterialkörper 1 und die seitlichen Rahmenelemente 2f die gleichen thermischen Eigenschaften haben. Der Energierichtungsgeber 3 ist jedenfalls ausreichend formsteif und druckfest ausgebildet, um beim Anpreßvorgang die begrenzten Kontaktbereiche, in denen die Schweißverbindungen ausgebildet werden sollen, für den Schweißvorgang stabil zu realisieren. Bei abgewandelten Ausführungsbeispielen kann das Rahmenelement 2f und der Energierichtungsgeber 3 auch aus Vliesstoffmaterial ausgebildet sein. Wenn der Filtermaterialkörper 1 ebenfalls aus Vliesstoff besteht, können insbesondere dann auf einfache Weise identische oder ähnliche thermische Eigenschaften für die zu verschweißenden Bauteile erhalten werden.

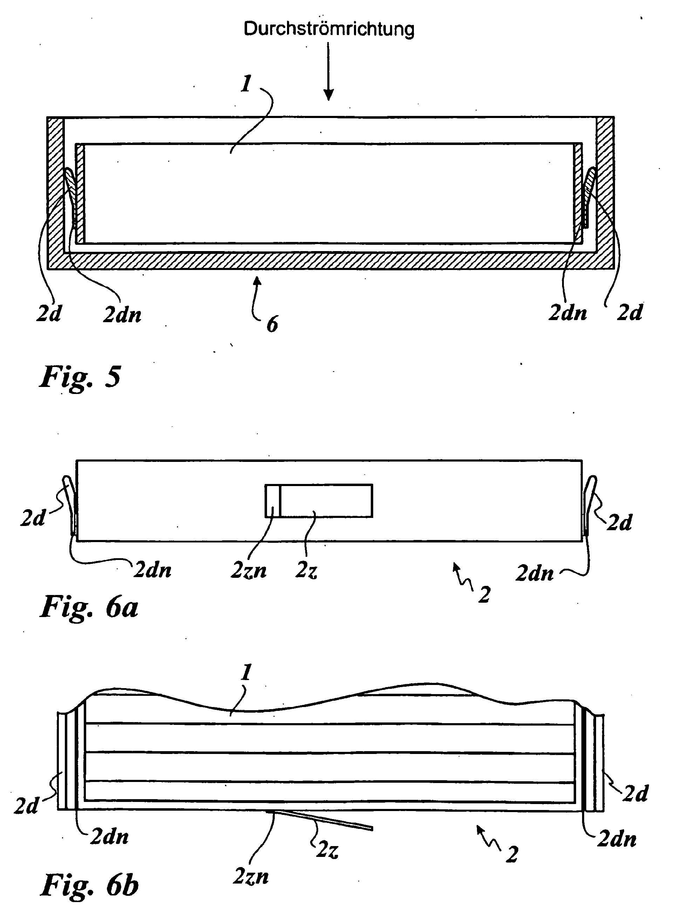

Bei den in den Figuren 5, 6a und 6b dargestellten Ausführungsbeispielen sind an dem Rahmen 2 Funktionsbauteile 2d, 2z durch Schweißverbindungen angebracht.

In Figur 5 ist die Filtereinrichtung in ein Gehäuse 6 eingebracht. Die Filtereinrichtung bestehend aus einem Filtermaterialkörper 1 und einem den Filtermaterialkörper 1 umgebenden Rahmen 2.

Wie in Figur 5 erkennbar ist, ist an dem seitlichen Rahmenelement 2f eine V-förmig abstehende Dichtlasche 2d angeschweißt, und zwar an der von dem Filtermaterialkörper 1 abgewandten Außenseite des Rahmenelements 2f. Die Schweißnaht 2dn verläuft parallel zur Längskante des Rahmenelements. Bei dem dargestellten Ausführungsbeispiel verläuft die Schweißnaht 2dn mit geringem Abstand zur Unterkante des Rahmenelements.

Sie ist in dem dargestellten Fall als relativ schmaler gerader Streifen ausgebildet, kann jedoch auch als gerade linienförmige Schweißnaht 2dn ausgebildet sein.

Bei dem dargestellten Ausführungsbeispiel in Figur 5 ist im Bereich der Schweißnaht 2dn zwischen der Dichtlasche 2d und dem Rahmenelement 2f ein separater Energierichtungsgeber 3 nicht erkennbar. Ebenfalls ist im Bereich der Schweißverbindung des Filtermaterialkörpers mit der Innenseite des Rahmenelements 2f kein Energierichtungsgeber erkennbar.

Die Schweißnähte können ohne Zwischenschaltung eines Energierichtungsgebers analog wie in Figur 4 gezeigt, ausgebildet werden.

Das Verschweißen der Dichtlasche 2d kann in einem ersten Schweißschritt, der durchgeführt wird, bevor das seitliche Rahmenelement 2f an seiner Innenseite mit dem Filtermaterialkörper 1 in der in Figur 4 dargestellten Weise verschweißt wird. Alternativ kann jedoch das Verschweißen der Dichtlasche 2d an der Außenseite des Rahmenelements 2f auch gleichzeitig mit dem Verschweißen der Faltenflanken an der Innenseite des Rahmenelements 2f erfolgen oder es kann zumindest der gesamte Schweißvorgang in zwei Schweißschritten nacheinander in derselben Apparatur erfolgen bei gemeinsamer Einspannung der zu verschweißenden Elemente in derselben Apparatur.

Wie in den Figuren 6a und 6b erkennbar, ist an der Außenseite des stirnseitigen Rahmenelementes 2s eine Auszuglasche 2z angeschweißt. Die Schweißverbindung ist an dem einen Ende der Auszuglasche 2z ausgebildet, und zwar als im wesentlichen linienförmige Schweißnaht 2zn zwischen der Außenseite des Rahmenelements 2s und der zugewandten Seite des Endes der Auszuglasche 2z. Zur Betätigung der Auszuglasche 2z wird das nicht angeschweißte freie Ende der Auszugslasche 2z von Hand ausgelenkt, um die Filtereinrichtung bestehend aus Filtermaterialkörper 1 und umgebenden Rahmen 2 aus dem Gehäuse 6, wie in Figur 5 ersichtlich, herauszuziehen. Die Schweißverbindung, mit der die Auszuglasche 2z an dem Rahmenelement 2s angebracht ist, bildet hierbei einen Befestigungspunkt in Art einer Gelenkstelle.

Die Schweißverbindung der Auszuglasche 2z kann in einem separaten Schweißschritt ausgebildet werden. Zunächst die Auszuglasche 2z an dem stirnseitigen Rahmenelement 2s angeschweißt werden und in einem separaten Schweißschritt kann sodann die Verschweißung des Rahmenelements 2s mit dem Filtermaterialkörper 1 vorgenommen werden und zwar als linienförmige Schweißnaht 2zn mit der stirnseitigen Endfalte des Filtermaterialkörpers 1. Alternativ können diese Schweißverbindungen auch gleichzeitig in derselben Apparatur oder unmittelbar aufeinanderfolgend vorgenommen werden, ähnlich wie dies vorangehend für die Schweißverbindung der Dichtlasche 2d in Verbindung mit Figur 5 beschrieben ist.

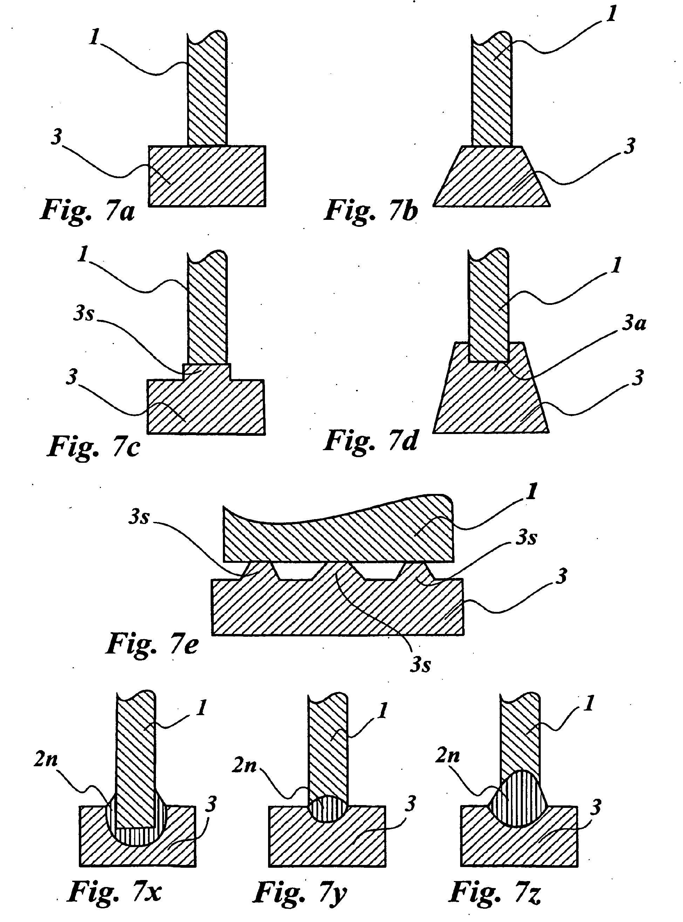

Die in den Figuren 7a bis 7e dargestellten Anordnungen zeigen unterschiedliche Ausführungsbeispiele des Energierichtungsgebers 3. Bei diesen Ausführungsbeispielen weisen die Energierichtungsgeber 3 eine unterschiedliche Querschnittsform auf. Die Querschnittsform liegt jedoch jeweils in den dargestellten Fällen in einer im wesentlichen viereckiger Grundform vor.

Der in Figur 7a dargestellte Energierichtungsgeber 3 weist einen rechteckigen Querschnitt auf, wobei die dem Filtermaterialkörper 1 zugewandte Seite des Energierichtungsgebers 3 länger ist als die Dicke des mit dem Energierichtungsgebers 3 zu verschweißenden Abschnitt des Filtermaterialkörpers 1 und diesem Abschnitt auf Stoß angeordnet ist.

Der in Figur 7b dargestellte Energierichtungsgeber 3 weist im Gegensatz zu dem in Figur 7a gezeigten Ausführungsbeispiel einen trapezförmigen Querschnitt auf. Hierbei ist die kürzere der beiden parallelen Seiten des Energierichtungsgebers 3 dem zu verschweißenden Abschnitt des Filtermaterialkörpers 1 zugewandt und mit diesem Abschnitt auf Stoß angeordnet. Auch in diesem Beispiel ist die dem Filtermaterialkörper 1 zugewandte Seite des Energierichtungsgebers 3 länger als die Dicke des zu verschweißenden Abschnitt des Filtermaterialkörpers 1.

In Figur 7c ist ähnlich zu dem in Figur 7a dargestellten Ausführungsbeispiel ein Energierichtungsgeber 3 mit rechteckigem Grundquerschnitt dargestellt. Im Gegensatz zu dem Ausführungsbeispiel aus Figur 7a weist der Energierichtungsgeber 3 einen im Querschnitt rechteckigen überstehenden Stegabschnitt 3s auf, der mit dem Filtermaterialkörper 1 zu verschweißen ist. Die dem Filtermaterialkörper 1 zugewandte Seite des Stegabschnitts 3s ist geringfügig breiter als die Dicke des zu verschweißenden Abschnitt des Filtermaterialkörpers 1.

Das in Figur 7d dargestellte Ausführungsbeispiel zeigt einen Energierichtungsgeber 3 mit im wesentlichen trapezförmigen Querschnitt ähnlich zu dem in Figur 7b. Der Energierichtungsgeber 3 weist hier lediglich eine zusätzliche Aufnahmenut 3a auf, die der formschlüssigen Aufnahme des zu verschweißenden Randabschnitts des Filtermaterialkörpers 1 dient.

In Figur 7e ist ein zu dem Ausführungsbeispiel in Figur 7c ähnliches weiteres Ausführungsbeispiel des Energierichtungsgebers 3 gezeigt. Im Unterschied zum Ausführungsbeispiel aus Figur 7c weist der Querschnitt im wesentlichen rechteckige Energierichtungsgeber 3 nun drei trapezförmige Stegabschnitte 3s auf, die auf der dem Filtermaterialkörper 1 zugewandten Seite zueinander beabstandet ausgebildet sind und mit ihrer kürzeren der beiden parallelen Seiten diesem Filtermaterialkörper 1 zugewandt sind. Die Gesamtbreite dieser Anordnung, bestehend aus diesen drei Stegabschnitten 3s, ist geringfügig kürzer als die Breite des mit diesen drei Stegabschnitten 3s zu verschweißenden Abschnitts des Filtermaterialkörpers 1.

Bei sämtlichen dargestellten Ausführungsbeispielen des Energierichtungsgebers 3 ist die Breite Querschnitts des Energierichtungsgebers 3 der Breite des zu verschweißenden Filtermaterialkörpers 1 angepaßt, indem die Breite des Energierichtungsgebers 3 geringfügig größer ist als die Dicke des zu verschweißenden Filtermaterialkörpers 1. Zusätzlich sind bei einigen Ausführungen spezielle Ausformungen im Kontaktbereich in Form von Stegabschnitten 3s (Figur 7c und 7e) bzw. Aufnahmeausnehmung (Figur 7d) ausgebildet. Dies begünstigt die auf engem Raum begrenzte Energieeintragung und entsprechend räumlich begrenzte Schweißnaht.

In den Figuren 7x bis 7z sind Ausführungen im verschweißten Zustand dargestellt. Die Schweißnähte 2n sind in diesen dargestellten Fällen jeweils unterschiedlich gestaltet und der Energierichtungsgeber 3 ist jeweils in unterschiedlichem Umfang in die Schweißverbindung eingeschmolzen. In Figur 7x weist die Schweißverbindung zwei parallele Schweißnähte 2n auf, die symmetrisch zum Filtermaterialkörper 1 auf dem Energierichtungsgeber 3 angeordnet sind. In diesem Fall ist beiderseits des Filtermaterialkörpers 1 eine Schweißnaht 2n ausgebildet. In Figur 7y und 7z ist im Prinzip nur eine Schweißnaht 2n vorhanden, wobei der Energierichtungsgeber 3 in unterschiedlichem Umfang verschmolzen ist. Der Unterschied zwischen den in den Figuren 7y und 7z gezeigten Ausführungen ist, dass bei der Ausführung in Figur 7z der Energierichtungsgeber 3 in größerem Umfang verschmolzen ist. In nicht dargestellten abgewandelten Ausführungen kann der Energierichtungsgeber 3 auch vollständig verschmolzen sein.

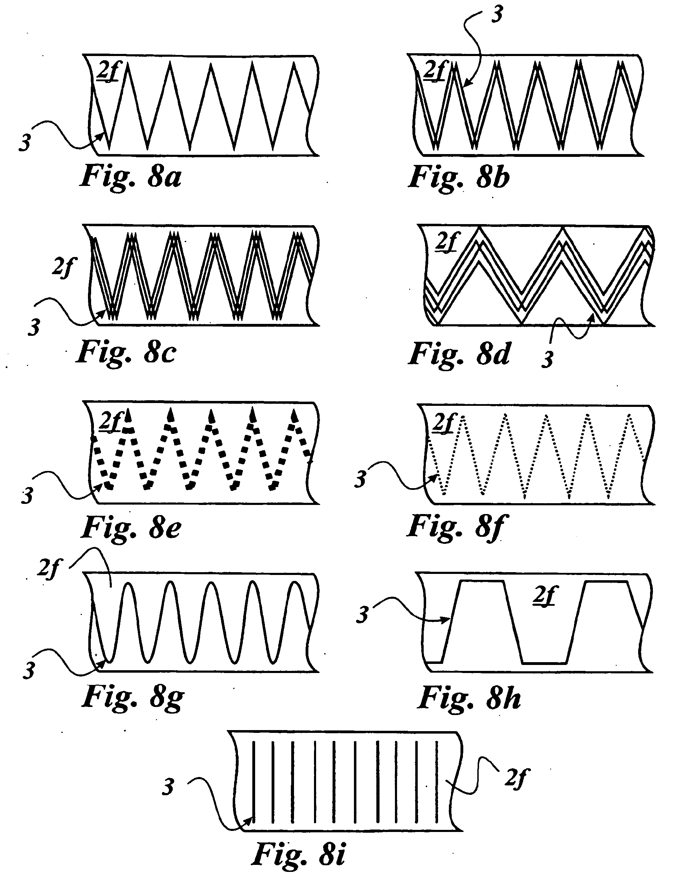

Die Figuren 8a bis 8i zeigen unterschiedliche Ausführungsbeispiele der Anordnung und des Verlaufs des Energierichtungsgebers 3 auf der dem Filtermaterialkörper 1 zugewandten Seite des seitlichen Rahmenelements 2f und zwar vor dem Schweißvorgang. Verschiedene Querschnitte des Energierichtungsgebers 3 sind bereits in den Figuren 7a bis 7e gezeigt. Solche Querschnitte können auch bei den in Figuren 8a bis 8i dargestellten Energierichtungsgebern 3 realisiert sein. Die Querschnitte sind in den Figuren 8a bis 8i im Einzelnen nicht dargestellt.

In Figur 8a ist der Verlauf des Energierichtungsgebers 3 auf dem seitlichen Rahmenelement 2f zickzackförmig ausgebildet entsprechend dem in den Figuren 1 bis 3 beschriebenen Ausführungsbeispiel. Der Energierichtungsgeber 3 ist als schmaler leistenförmiger Körper ausgebildet. In Vereinfachung ist er in den Figuren 8a bis 8i als Linie dargestellt. Der Energierichtungsgeber 3 weist auch in diesen Ausführungsbeispielen eine endliche Breite und Höhe auf.

In den Figuren 8b und 8c sind zwei bzw. drei zickzacklinienförmige Energierichtungsgeber 3 dargestellt, die parallel mit geringem Abstand versetzt auf der Innenseite des seitlichen Rahmenelements 2f zueinanderverlaufen. Bei nicht dargestellten abgewandelten Ausführungsbeispielen können aber auch entsprechend mehr als drei Energierichtungsgeber 3 vorgesehen sein, die parallel zueinander gering beabstandet versetzt zueinander verlaufen.

In Figur 8d sind in Abwandlung zu dem Beispiel in Figur 8b die beiden parallel und zickzackförmig mit geringem Abstand in Längsrichtung des seitlichen Rahmenelements 2f verlaufenden Energierichtungsgeber 3 durch zwei zusätzliche zickzackförmig oberhalb und unterhalb der ersten beiden Energierichtungsgeber verlaufende Energierichtungsgeber 3 mit geringen Abstand eingerahmt.

Der Vorteil der in den Figuren 8b bis 8d dargestellten Ausführungsbeispiele ist, dass der Faltenverlauf des Filtermaterialkörpers 1 weniger genau als in dem in Figur 8a gezeigten Ausführungsbeispiel dem Verlauf des Energierichtungsgebers 3 folgen muss, da der Energierichtungsgeber 3 für die Auflage des anzuschweißenden Filtermaterials gewissermaßen eine Toleranzauflagefläche aufweist. Des weiteren ist es auch möglich, dickere Filtermaterialkörper 1 als bei dem in Figur 8a gezeigtem Ausführungsbeispiel einzusetzen. Die Filtermaterialkörper können insbesondere mehrlagig und insbesondere auch als Kombifilter ausgebildet sein.

In den Figuren 8e und 8f besteht der Energierichtungsgeber 3 aus in einer zickzackförmigen Linie hintereinander angeordneten Zapfen. Die Figuren 8e und 8f unterscheiden sich dadurch, dass die Zapfen in Figur 8e eine größere Querschnittsfläche als die Zapfen in Figur 8f aufweisen.

In Figur 8g ist der zickzackförmige Verlauf des Energierichtungsgebers 3 wellenförmig, d. h. die Zickzack-Ecken sind jeweils abgerundet. Der Verlauf ist bei dem dargestellten Ausführungsbeispiel im wesentlichen sinusförmig.

In Figur 8h weist der Energierichtungsgeber 3 ebenfalls einen periodischen Verlauf auf und zwar mit trapezförmigen Wellen.

In Figur 8i ist der Energierichtungsgeber 3 nicht als zickzackförmiger Körper sondern in Form separater Leisten ausgebildet, die auf dem seitlichen Rahmenelement 2f parallel beabstandet zueinander angeordnet sind und sich dabei jeweils senkrecht zur Längsrichtung des seitlichen Rahmenelements 2f erstrecken. Der Vorteil dieses Ausführungsbeispieles liegt darin, dass die Ausgestaltung dieser separaten Energierichtungsgeber 3 unabhängig vom Verlauf der Faltenkanten ist, d. h. mit dieser Ausführung können in ihrer Höhe und Faltenverlauf verschieden gestaltete plissierte Filtermaterialkörper 1 mit dem Rahmenelement verschweißt werden.

### Bezugszeichenliste

- 1: Filtermaterialkörper
- 1a: Faltenkanten
- 1s: Stirnkante
- 1e: Faltenflanke
- 1f: Seitenkante
- 2: Rahmen
- 2f: Seitliches Rahmenelement
- 2s: Stirnseitiges Rahmenelement
- 2d: Dichtlasche
- 2dn: Schweißnaht der Dichtlasche
- 2n: Schweißnaht
- 2v: Filmscharnier
- 2z: Auszuglasche
- 2zn: Schweißnaht der Auszuglasche
- 3: Energierichtungsgeber
- 3a: Aufnahmenut
- 3s: Stegabschnitt
- 4: Werkzeugaufnahme
- 5: Sonotrode
- 6: Gehäuse

## Patentansprüche

1. Verfahren zur Herstellung einer Filtereinrichtung mit einem plissierten Filtermaterialkörper (1) aus einer oder mehrerer Filtermateriallagen und mit einem Rahmen, der mit mindestens einem Abschnitt eines Randbereichs des Filtermaterialkörpers (1) verbunden ist, wobei der Rahmen zwei seitliche Rahmenelemente (2f) aufweist,
wobei vorgesehen ist, dass der Filtermaterialkörper (1) und der Rahmen durch Verschweißen miteinander verbunden werden, indem:
- ein Energierichtungsgeber (3) eingesetzt wird, der als ein gegenüber dem Filtermaterialkörper (1) und dem Rahmen separates Bauteil ausgebildet ist, wobei zunächst eine Anordnung aus dem Filtermaterialkörper (1), dem Energierichtungsgeber (3) und dem Rahmen erstellt wird, bei der der Filtermaterialkörper (1), der Energierichtungsgeber (3) und der Rahmen in einer Reihe nebeneinander angeordnet sind und wobei eine Sonotrode (5) an der von dem Energierichtungsgeber (3) und dem Filtermaterialkörper (1) abgewandten Seite an dem zu verschweißenden seitlichen Rahmenelement (2f) anliegend angeordnet wird,
- sodann mit Hilfe der Sonotrode (5) Energie in diese Anordnung eingeleitet wird, indem die Energie über die Sonotrode (5) in den Rahmen eingeleitet wird und durch den Rahmen, den Energierichtungsgeber (3) und den Filtermaterialkörper (1) hindurchgeleitet wird und zwar durch einen Bereich, in welchem zumindest in einem Abschnitt die Schweißverbindung ausgebildet wird,
- die Schweißverbindung zwischen dem plissierten Filtermaterialkörper (1) und den Rahmenelementen (2f) ausgebildet wird, wobei während der Ausbildung der Schweißverbindung zwischen den Faltenflanken und der Innenseite des seitlichen Rahmenelements (2f) der Energierichtungsgeber (3) angeordnet ist und der Energierichtungsgeber (3) beim Schweißvorgang die Schweißenergie durch einen örtlich sehr begrenzten Bereich leitet, um in dem Bereich des Energierichtungsgebers (3) die Schweißverbindung auszubilden, wobei im wesentlichen linienförmige Schweißnähte (2n) zwischen den Faltenflanken und der Innenseite der seitlichen Rahmenelemente (2f) und zwar jeweils als Linie entsprechend dem zickzackförmigen Verlauf der Faltenflanken gebildet werden.

2. Verfahren nach einem der vorangehenden Ansprüche,
**dadurch gekennzeichnet,**
**dass** der Energierichtungsgeber (3) aus Material mit ähnlichen thermischen Eigenschaften wie der Filtermaterialkörper (1), vorzugsweise aus identischem Material wie der Filtermaterialkörper (1) ausgebildet ist und/oder aus Material mit ähnlichen thermischen Eigenschaften wie der Rahmen, vorzugsweise aus identischem Material wie der Rahmen ausgebildet ist

3. Verfahren nach einem der vorangehenden Ansprüche,
**dadurch gekennzeichnet,**
**dass** vor dem Verschweißen zumindest ein Abschnitt des Filtermaterialkörpers (1) in eine Werkzeugaufnahme (4) eingebracht wird, derart, dass der zu verschweißende Randbereich des Filtermaterialkörpers (1) aus der Werkzeugaufnahme (4) herausragt und/oder freiliegt und beim Schweißvorgang die Werkzeugaufnahme (4) und/oder der zu verschweißende Randbereich des Filtermaterialkörpers (1) der aus der Werkzeugaufnahme (4) herausragt oder daraus freiliegt als Gegendruckelement zu dem mit der Sonotrode (5) beaufschlagtem Rahmen wirkt.

4. Verfahren nach Anspruch 3,
**dadurch gekennzeichnet,**
**dass** zwischen dem aus der Werkzeugaufnahme (4) herausragenden oder freiliegenden Bereich des Filtermaterialkörpers (1) und dem von der
Sonotrode (5) beaufschlagtem Rahmen der Energierichtungsgeber (3) angeordnet ist.

5. Verfahren nach einem der Ansprüche 1 bis 4,
**dadurch gekennzeichnet,**
**dass** vor dem Schweißvorgang der Rahmen in eine Werkzeugaufnahme (4) derart eingebracht wird, dass der mit dem Randbereich des Filtermaterialkörpers (1) zu verschweißende Bereich des Rahmens aus der Werkzeugaufnahme (4) herausragt und/oder freiliegt und die Werkzeugaufnahme (4) und/oder der zu verschweißende Randbereich des Rahmens, der aus der Werkzeugaufnahme (4) herausragt oder daraus freiliegt als Gegendruckelement zu dem mit der Sonotrode (5) beaufschlagten Filtermaterialkörper (1) wirkt.

6. Verfahren nach Anspruch 5,
**dadurch gekennzeichnet,**
**dass** zwischen dem aus der Werkzeugaufnahme (4) herausragende oder freiliegende Bereiche des Rahmens und dem von der Sonotrode (5) beaufschlagtem Filtermaterialkörper (1) der Energierichtungsgeber (3) angeordnet ist.

7. Verfahren nach einem der vorangehenden Ansprüche,
**dadurch gekennzeichnet,**
**dass** der Energierichtungsgeber (3) als Körper mit einer Form entsprechend der Form der Schweißverbindung ausgebildet.

8. Verfahren nach einem der vorangehenden Ansprüche,
**dadurch gekennzeichnet,**
**dass** als Energierichtungsgeber (3) ein Körper eingesetzt wird, der als ein im Verlauf dem Verlauf der Faltenkontur entsprechender leistenförmiger Körper ausgebildet ist.

9. Verfahren nach einem der vorangehenden Ansprüche,
**dadurch gekennzeichnet,**
**dass** der Energierichtungsgeber (3) einen periodischen Verlauf, vorzugsweise zickzackförmigen oder wellenförmigen Verlauf aufweist.

10. Verfahren nach einem der vorangehenden Ansprüche,
**dadurch gekennzeichnet,**
**dass** mehrere Sonotroden zur Einleitung von Energie zur Ausbildung der Schweißverbindung verwendet werden.

11. Verfahren nach einem der vorangehenden Ansprüche,
**dadurch gekennzeichnet,**
**dass** ein Funktionsbauteil (2d, 2z) der Filtereinrichtung mit dem Rahmen und/oder mit dem Filtermaterialkörper (1) durch Verschweißen verbunden wird.

12. Verfahren nach Anspruch 11,
**dadurch gekennzeichnet,**
**dass** die Schweißverbindung zwischen dem Funktionsbauteil (2d, 2z) und dem Rahmen bzw. dem Filtermaterialkörper (1) ausgebildet wird bevor das Verschweißen des Filtermaterialkörpers (1) mit dem Rahmen erfolgt oder gleichzeitig mit dem Verschweißen des Filtermaterialkörpers (1) und des Rahmens erfolgt oder nach dem Verschweißen des Filtermaterialkörpers (1) und des Rahmens erfolgt.

13. Verfahren nach einem der vorangehenden Ansprüche,
**dadurch gekennzeichnet,**
**dass** die Schweißverbindung durch Ultraschallschweißen erfolgt.

14. Verfahren nach einem der vorangehenden Ansprüche
**dadurch gekennzeichnet,**
**dass** die Schweißverbindung in ihren Abmessungen quer zur Längserstreckung eng begrenzt ausgebildet wird zwischen dem Rahmen und
dem Randbereich des Fittermaterialkörpers (1) angeordnet ist.

## Claims

1. A method for producing a filter device comprising a pleated filter material body (1) made of one or more filter material layers and comprising a frame which is connected at least to a portion of an edge region of the filter material body (1), the frame comprising two lateral frame elements (2f),
wherein it is provided that the filter material body (1) and the frame are interconnected by welding, in that:
- an energy direction indicator (3) is used which is formed as a component separate from the filter material body (1) and the frame, an arrangement of the filter material body (1), the energy direction indicator (3) and the frame first being provided, in which the filter material body (1), the energy direction indicator (3) and the frame are arranged side by side in a row, and a sonotrode (5) being arranged on the side remote from the energy direction indicator (3) and the filter material body (1) adjacent to the lateral frame element (2f) to be welded,
- then with the aid of the sonotrode (5), energy is introduced into this arrangement in that the energy is introduced via the sonotrode (5) into the frame and is passed through the frame, the energy direction indicator (3) and the filter material body (1), more specifically through a region in which the weld connection is formed, at least in a portion,
- the weld connection is formed between the pleated filter material body (1) and the frame elements (2f), the energy direction indicator (3) being arranged during the formation of the weld connection between the fold edges and the inner face of the lateral frame element (2f), and the energy direction indicator (3) guiding the welding energy through a locally very narrow region during the welding process so as to form the weld connection in the region of the energy direction indicator (3), substantially linear weld seams (2n) being formed between the fold edges and the inner face of the lateral frame element (2f), in each case more specifically as a line corresponding to the zigzagged course of the fold edges.

2. The method according to the preceding claim,
**characterised in that**
the energy direction indicator (3) is formed of material having similar thermal properties to the filter material body (1), preferably of a material identical the filter material body (1) and/or is formed of a material having similar thermal properties to the frame, preferably of a material identical to the frame.

3. The method according to any one of the preceding claims,
**characterised in that**
at least a portion of the filter material body (1) is placed in a tool holder (4) before the welding process, in such a way that the edge region of the filter material body (1) to be welded protrudes from the tool holder (4) and/or is exposed, and during the welding process the tool holder (4) and/or the edge region of the filter material body (1) to be welded which protrudes from the tool holder (4) or is exposed therefrom acts as a counter-pressure element to the frame acted on by the sonotrode (5).

4. The method according to claim 3,
**characterised in that**
the energy direction indicator (3) is arranged between the region of the filter material body (1) protruding from the tool holder (4) or exposed and the frame acted on by the sonotrode (5).

5. The method according to any one of claims 1 to 4,
**characterised in that**
the frame is placed in a tool holder (4) before the welding process, in such a way that the region of the frame to be welded to the edge region of the filter material body (1) protrudes from the tool holder (4) and/or is exposed, and the tool holder (4) and/or the edge region of the frame to be welded which protrudes from the tool holder (4) or is exposed therefrom acts as a counter-pressure element to the filter material body (1) acted on by the sonotrode (5).

6. The method according to claim 5,
**characterised in that**
the energy direction indicator (3) is arranged between the regions of the frame protruding from the tool holder (4) or exposed and the filter material body (1) acted on by the sonotrode (5).

7. The method according to any one of the preceding claims,
**characterised in that**
the energy direction indicator (3) is formed as a body having a shape corresponding to the shape of the weld connection.

8. The method according to any one of the preceding claims,
**characterised in that**
a body which is formed as a strip-like body of which the course corresponds to the course of the fold contour is used as an energy direction indicator (3).

9. The method according to any one of the preceding claims,
**characterised in that**
the energy direction indicator (3) comprises a periodic course, preferably a zigzagged or undulating course.

10. The method according to any one of the preceding claims,
**characterised in that**
a plurality of sonotrodes are used to introduce energy to form the weld connection.

11. The method according to any one of the preceding claims,
**characterised in that**
a functional component (2d, 2z) of the filter device is connected to the frame and/or to the filter material body (1) by welding.

12. The method according to claim 11,
**characterised in that**
the weld connection is formed between the functional component (2d, 2z) and the frame or filter material body (1) before the filter material body (1) is welded to the frame, or occurs simultaneously with the welding of the filter material body (1) and of the frame, or after the welding of the filter material body (1) and of the frame.

13. The method according to any one of the preceding claims,
**characterised in that**
the weld connection is achieved by ultrasonic welding.

14. The method according to any one of the preceding claims,
**characterised in that**
the weld connection is dimensioned within narrow limits transverse to the longitudinal extent and is arranged between the frame and the edge region of the filter material body (1).

## Revendications

1. Procédé pour la fabrication d'un dispositif de filtre comprenant un corps plissé en matériau filtrant (1) à base d'une ou de plusieurs couches de matériau filtrant et un cadre, qui est relié à au moins une partie d'une zone de bordure du corps en matériau filtrant (1), le cadre présentant deux éléments de cadre (2f) latéraux,
dans lequel il est prévu que le corps en matériau filtrant (1) et le cadre sont reliés l'un à l'autre par soudage, sachant que :
- on utilise un indicateur de direction d'énergie (3), qui est conçu sous forme d'un composant séparé par rapport au corps en matériau filtrant (1) et au cadre, un agencement constitué du corps en matériau filtrant (1), de l'indicateur de direction d'énergie (3) et du cadre étant élaboré pour commencer, sur lequel le corps en matériau filtrant (1), l'indicateur de direction d'énergie (3) et le cadre sont disposés dans une ligne les uns à côté des autres, et une sonotrode (5) étant disposée sur le côté opposé à l'indicateur de direction d'énergie (3) et au corps en matériau filtrant (1) en s'appuyant sur l'élément de cadre (2f) latéral à souder,
- on introduit ensuite de l'énergie dans cet agencement à l'aide de la sonotrode (5) en introduisant l'énergie par la sonotrode (5) dans le cadre et en l'acheminant par le cadre, l'indicateur de direction d'énergie (3) et le corps en matériau filtrant (1), et ce par une zone dans laquelle l'assemblage soudé est réalisé au moins dans une partie,
- l'assemblage soudé est réalisé entre le corps plissé en matériau filtrant (1) et les éléments de cadre (2f), l'indicateur de direction d'énergie (3) étant disposé entre les flancs de plis et le côté intérieur de l'élément de cadre (2f) latéral pendant la réalisation de l'assemblage soudé et l'indicateur de direction d'énergie (3) guidant lors du processus de soudage l'énergie de soudage par une zone très limitée localement, afin de réaliser l'assemblage soudé dans la zone de l'indicateur de direction d'énergie (3), des cordons de soudure (2n) essentiellement linéaires étant formés entre les flancs de plis et le côté intérieur des éléments de cadre (2f) latéraux et ce à chaque fois sous forme de ligne en fonction du tracé en zigzag des flancs de plis.

2. Procédé selon l'une quelconque des revendications précédentes,
**caractérisé en ce que**
l'indicateur de direction d'énergie (3) est conçu à base de matériau présentant des propriétés thermiques identiques à celles du corps en matériau filtrant (1), de préférence à base de matériau identique au corps en matériau filtrant (1) et/ou à base de matériau présentant des propriétés thermiques identiques au cadre, de préférence à base de matériau identique au cadre.

3. Procédé selon l'une quelconque des revendications précédentes,
**caractérisé en ce**
**qu'**au moins une partie du corps en matériau filtrant (1) est introduite dans un logement d'outil (4) avant le soudage, de telle sorte que la zone périphérique à souder du corps en matériau filtrant (1) dépasse du logement d'outil (4) et/ou est dégagée et, lors du processus de soudage, le logement d'outil (4) et/ou la zone périphérique à souder du corps en matériau filtrant (1), qui dépasse du logement d'outil (4) ou est dégagée, agit comme élément de contre-pression par rapport au cadre sollicité avec la sonotrode (5).

4. Procédé selon la revendication 3,
**caractérisé en ce que**
l'indicateur de direction d'énergie (3) est disposé entre la zone dépassant du logement d'outil (4) ou dégagée du corps en matériau filtrant (1) et le cadre sollicité par la sonotrode (5).

5. Procédé selon l'une quelconque des revendications 1 à 4,
**caractérisé en ce que**
le cadre est introduit dans un logement d'outil (4) avant le processus de soudage, de telle sorte que la zone, à souder avec la zone périphérique du corps en matériau filtrant (1), du cadre dépasse du logement d'outil (4) et/ou est dégagée et le logement d'outil (4) et/ou la zone périphérique à souder du cadre, qui dépasse du logement d'outil (4) ou est dégagée, agit comme élément de contre-pression par rapport au corps en matériau filtrant (1) sollicité avec la sonotrode (5).

6. Procédé selon la revendication 5,
**caractérisé en ce que**
l'indicateur de direction d'énergie (3) est disposé entre la zone, dépassant du logement d'outil (4) ou dégagée, du cadre et le corps en matériau filtrant (1) sollicité par la sonotrode (5).

7. Procédé selon l'une quelconque des revendications précédentes,
**caractérisé en ce que**
l'indicateur de direction d'énergie (3) est conçu comme corps avec une forme correspondant à la forme de l'assemblage soudé.

8. Procédé selon l'une quelconque des revendications précédentes,
**caractérisé en ce**
**qu'**on utilise comme indicateur de direction d'énergie (3) un corps qui est conçu comme un corps en forme de baguette correspondant dans le tracé au tracé du contour de pli.

9. Procédé selon l'une quelconque des revendications précédentes,
**caractérisé en ce que**
l'indicateur de direction d'énergie (3) présente un tracé périodique, de préférence un tracé en forme de zigzag ou de forme ondulée.

10. Procédé selon l'une quelconque des revendications précédentes,
**caractérisé en ce que**
plusieurs sonotrodes sont utilisées pour l'introduction d'énergie pour réaliser l'assemblage soudé.

11. Procédé selon l'une quelconque des revendications précédentes,
**caractérisé en ce**
**qu'**un élément fonctionnel (2d, 2z) du dispositif de filtre est relié par soudage au cadre et/ou au corps en matériau filtrant (1).

12. Procédé selon la revendication 11,
**caractérisé en ce que**
l'assemblage soudé est réalisé entre l'élément fonctionnel (2d, 2z) et le cadre ou le corps en matériau filtrant (1), avant que le soudage du corps en matériau filtrant (1) avec le cadre s'effectue ou en même temps que le soudage du corps en matériau filtrant (1) et du cadre ou après le soudage du corps en matériau filtrant (1 ) et du cadre.

13. Procédé selon l'une quelconque des revendications précédentes,
**caractérisé en ce que**
l'assemblage soudé s'effectue par soudage aux ultrasons.

14. Procédé selon l'une quelconque des revendications précédentes,
**caractérisé en ce que**
l'assemblage soudé est réalisé de façon très limitée dans ses dimensions transversalement à l'extension longitudinale et est disposé entre le cadre et la zone périphérique du corps en matériau filtrant (1).
